# FASCICULE DE BREVET EUROPEEN

(11) **EP 3 262 553 B1**
(45) Date de publication et mention de la délivrance du brevet: **10.04.2019**
(21) Numéro de dépôt: 16712952.7
(22) Date de dépôt: 24.02.2016
(51) Int. Cl.: G06F 21/32, G06F 21/62

(54) **PROCEDE DE TRANSACTION SANS SUPPORT PHYSIQUE D'UN IDENTIFIANT DE SECURITE ET SANS JETON, SECURISE PAR LE DECOUPLAGE STRUCTUREL DES IDENTIFIANTS PERSONNELS ET DE SERVICES**
VERFAHREN ZUR TRANSAKTION OHNE KÖRPERLICHE UNTERSTÜTZUNG EINES SICHERHEITSIDENTIFIKATORS UND OHNE TOKEN, ABGESICHERT DURCH STRUKTURELLE ENTKOPPLUNG DER PERSÖNLICHEN UND DIENSTIDENTIFIKATOREN
METHOD OF TRANSACTION WITHOUT PHYSICAL SUPPORT OF A SECURITY IDENTIFIER AND WITHOUT TOKEN, SECURED BY THE STRUCTURAL DECOUPLING OF THE PERSONAL AND SERVICE IDENTIFIERS

(30) Priorité: 27.02.2015 FR 1551706
(43) Date de publication de la demande: 03.01.2018
(73) Titulaire: A3BC IP, 75002 Paris (FR)
(72) Inventeur: KROB, Daniel, 75014 Paris (FR)
(74) Mandataire: IP Trust
(86) Numéro de dépôt international: PCT/FR2016/050423
(87) Numéro de publication internationale: WO 2016/135419

(56) Documents cités:
- WO-A1-2006/111205
- JIANG PENG ET AL: "An anonymous and efficient remote biometrics user authentication scheme in a multi server environment", FRONTIERS OF COMPUTER SCIENCE, SPRINGER BERLIN HEIDELBERG, BERLIN/HEIDELBERG, vol. 9, no. 1, 29 décembre 2014 (2014-12-29), pages 142-156, XP035435864, ISSN: 2095-2228, DOI: 10.1007/S11704-014-3125-7 [extrait le 2014-12-29]

## Description

### Domaine de l'invention

La présente invention concerne le domaine des transactions électroniques à l'aide d'un terminal connecté à un serveur. Elle concerne notamment le domaine du paiement électronique, du commerce électronique et plus généralement de tout type de transactions informatiques et accès sécurisé à une ressource numérique ou physique (par exemple contrôle d'accès).

La sécurité des transactions constitue un enjeu essentiel, et a donné lieu à de nombreuses solutions permettant de limiter les risques de fraudes en ce qui concerne l'auteur de la transaction ou la nature de la transaction.

Les solutions les plus usitées sont basées sur l'utilisation d'un jeton numérique enregistré sur un support physique contrôlé par l'utilisateur. Ce support physique est par exemple une carte à mémoire, une clé USB, un téléphone ou une tablette comportant une mémoire pour l'enregistrement du jeton. Cette solution est généralement insuffisante, car il suffit de dérober le support physique pour se substituer à l'utilisateur autorisé.

On a alors proposé des solutions d'authentification forte. Certaines combinent une authentification par jeton à un ou plusieurs autres moyens d'authentification, par combinaison « identifiant - mot de passe », par envoi d'un code de validation par un canal distinct de celui utilisé pour la transaction ou encore par utilisation d'une information biométrique.

Une autre solution d'authentification forte s'appuie sur l'utilisation d'un jeton unique et d'un algorithme de génération de mots de passe unique, à durée de vie courte, qui se synchronise avec une application cliente installée sur le poste de travail. Cet algorithme peut être installé sur une calculette se contentant alors d'afficher le code généré, sur une clé USB, qu'il faudra brancher à l'appareil, ou sur une carte à puces qui transmet le code par contact avec un appareil de lecture. Le mot de passe ainsi généré n'est valable que pour une période de temps de 1 à 2 minutes.

Il existe également des cartes reposant sur le principe du jeton unique, mais sans code à saisir pour l'utilisateur. La transmission de ce code s'effectue alors par ondes électromagnétiques, mais nécessite la mise en place d'un récepteur. Enfin, le principe du jeton est aussi appliqué sur des cartes plastiques imprimées. Sur ces cartes figurent une série de numéro et l'utilisateur découvre leur ordre d'entrée et la composition du code unique lors de la phase d'authentification. Le logiciel client se charge de lui indiquer la ligne et la colonne du chiffre à saisir pour s'authentifier.

Plus récemment, l'évolution des techniques de reconnaissance biométrique conduit a permis de développer des technologies d'authentification forte reposant sur des systèmes de capture d'images couplés à une base de données centrale stockant les informations personnelles. Ces technologies utilisent :
- la reconnaissance digitale,
- la reconnaissance d'iris,
- la reconnaissance faciale et
- la reconnaissance vocale.

L'avantage de ces méthodes est clair : l'utilisateur a toujours sur lui ses "codes d'authentification" et ne peut les perdre ou les oublier.

Toutes ces solutions sont basées sur une distinction entre « l'identification » et « l'authentification ».

L'identification est réalisée soit par un jeton contenant dans son certificat des informations transmises au serveur, soit par la saisie d'un code personnel, de type « PIN ».

L'authentification est réalisée par une action distincte et complémentaire, destinée à valider la première information d'identification.

Optionnellement, une troisième étape de certification est réalisée par un tiers de confiance pour vérifier si un utilisateur dûment identifié et authentifié est autorisé à utiliser un service.

### Etat de la technique

On connaît dans l'état de la technique la demande de brevet internationale WO 1998015924 décrivant un moyen et un procédé conçus pour permettre à un client d'utiliser un système informatique pour entrer un numéro d'identification personnel (PIN), un ou plusieurs échantillons biométriques d'enregistrement, et un ou plusieurs de ses comptes bancaires. Au cours d'une étape de lancement, le client lance l'accès à son compte à partir d'un guichet automatique (ATM), d'un ordinateur personnel ou de tout autre dispositif d'accès à un fichier financier, en entrant les informations relatives à son authentification, qui comprennent un PIN et au moins un échantillon biométrique d'entrée en session. Aucun dispositif à mémoire artificielle portable, comme une carte à puce ou une carte magnétique, n'est nécessaire dans cette étape.

Au cours d'une étape de transmission, un message de demande d'accès au compte, comprenant les informations relatives à l'authentification du client et d'autres données, est envoyé à partir de l'ATM à destination du système informatique. Après que le système informatique a reçu les informations relatives à l'authentification personnelle contenues dans le message de demande d'accès au compte, les informations relatives à l'authentification personnelle sont comparées aux échantillons biométriques entrés, afin d'accepter ou de refuser l'identification du client au cours d'une étape d'identification du client.

Si cette identification est acceptée, un numéro de compte bancaire du client est extrait, au cours d'une étape d'extraction. Le client est finalement autorisé à accéder à son compte bancaire après que son identification a été acceptée. Avec la présente invention, un client peut avoir accès à ses comptes bancaires sans nécessiter l'utilisation d'un jeton enregistré sur des dispositifs à mémoire portables, par exemple des cartes à puce ou des cartes magnétiques. Cette solution permet aux clients de choisir rapidement un compte parmi différents comptes bancaires.

On connaît aussi le brevet WO 2001027723 décrivant un procédé permettant l'authentification d'un utilisateur par une plate-forme informatique contenant un composant éprouvé contenant un processeur sécurisé protégé contre toute interférence physique et logique. Ce procédé consiste:
- pour le processeur sécurisé à authentifier un lecteur biométrique et à authentifier un jeton sécurisé contenant les données biométriques authentiques de l'utilisateur;
- à saisir les données biométriques de l'utilisateur à l'aide du lecteur biométrique, et à transférer les données biométriques de l'utilisateur ainsi saisies dans le processeur sécurisé;
- à transférer les données biométriques authentiques de l'utilisateur dans le processeur sécurisé;
- à comparer les données biométriques authentiques de l'utilisateur avec les données biométriques de l'utilisateur saisies;
- et, pour le processeur sécurisé, à authentifier l'utilisateur sur la base de la comparaison de ces données biométriques.

Le brevet américain US 6154879 décrit une méthode pour l'accès sans jeton biométrique aux comptes financiers dans un établissement utilisant un guichet automatique.

Cette méthode comprend une étape d'enregistrement de l'utilisateur, dans lequel un utilisateur s'enregistre avec un identifiant électronique associé à un ou plusieurs enregistrement d'échantillons biométriques et un ou plusieurs comptes d'utilisateurs.

Au cours d'une étape d'initiation, l'utilisateur procède à un accès au compte à un guichet automatique en soumettant au moins un échantillon biométrique.

L'identifiant électronique associé à l'échantillon biométrique dans le message de demande d'accès à un compte auprès d'un échantillon biométrique d'inscription, sont traités pour produire soit une identification réussi ou échoué de l'utilisateur. Lors de l'identification réussie de l'utilisateur, au moins un compte financier de l'utilisateur sont récupérées, et dans une étape d'accès, après une identification réussie de l'utilisateur et la récupération réussie de compte financier, l'utilisateur est autorisé à accéder au compte financier de l'utilisateur.

On connaît également la demande de brevet internationale WO 2006111205 qui concerne un système de stockage de données qui permet de protéger la vie privée et de garantir la sécurité. Ce système comprend une pluralité de noeuds dans une architecture en réseaux, lesdits noeuds étant conçus pour communiquer et coopérer en toute sécurité entre eux de manière à permettre le stockage et l'extraction de données. Une seule donnée biométrique est associée à un identificateur aveugle et divisée, de façon sécurisée, à travers au moins un noeud, pour le stockage de données. Les données mêmes et le lien avec l'individu d'origine, à partir de qui sont acquises les données biométriques, ne peuvent pas être obtenus sans coopération avec au moins deux noeuds.

On connaît encore l'article « JIANG PENG et al : an anonymous and efficient remote biométries user authentification scheme in a multi serveur environment » paru dans FRONTIERS OF COMPUTER SCIENCE Springer Berlin Heidelberg, Vol. 9, n° 1, 20 décembre 2014, ISSN : 2095-2228, XPO35435864.

### Inconvénients des solutions de l'art antérieur

En premier lieu, les solutions de l'art antérieur présentent des failles au niveau du protocole d'identification et/ou d'authentification. Un attaquant peut réaliser des opérations malveillantes (exemple de la « Yes Card ») en se faisant passer pour l'utilisateur autorisé.

D'autres attaques existent au niveau des serveurs stockant les informations transactionnelles telles que le numéro de la carte, le cryptogramme, l'identité du porteur,...

Les solutions de l'art antérieur sont généralement basées sur l'utilisation d'une information numérique unique constituant un identifiant, associée à d'autres informations numériques, notamment biométriques, pour l'authentification de l'identifiant.

Les solutions de l'art antérieur présentent un problème technique majeur car elles ne permettent pas le stockage de données biométriques sous une forme qui assure à la fois leur sécurité et leur anonymisation.

Une des sources de vulnérabilité réside dans la gestion des identifiants. La connaissance de l'identifiant permet de franchir une première étape de la procédure d'autorisation à un service, l'information biométrique servant à l'étape suivante qui est l'authentification de l'utilisateur ayant transmis - licitement ou frauduleusement - un identifiant valide. La sécurité de l'identifiant dépend des mesures prises par l'utilisateur pour en conserver le caractère secret, et le cas échéant des moyens électroniques prévues sur le support physique de l'identifiant lorsqu'il est enregistré sur une clé, une carte ou un équipement portable tel qu'un téléphone.

Les solutions de l'art antérieur présentent un second inconvénient qui concerne la sécurité des données biométriques authentiques enregistrées lors de la création d'un compte d'un utilisateur. Ces données sont généralement enregistrées dans une zone sécurisée DMZ du serveur, mais en cas d'attaque informatique, il reste possible de récupérer l'ensemble des données biométriques associées aux identifiants des utilisateurs.

Un troisième inconvénient réside dans le risque d'interception des données biométriques et de réutilisation frauduleuse de ces données.

Un quatrième inconvénient réside dans le risque de création d'un faux compte pour accéder à des services d'un utilisateur tiers.

Par ailleurs, toutes ces solutions de l'art antérieur sont basées sur une étape d'identification utilisant une information numérique attribuée de manière arbitraire à l'utilisateur, et vérifiée par un premier protocole distinct du protocole d'authentification et le cas échéant du protocole de certification.

On accepte implicitement que l'identification soit vulnérable et ne nécessite que peu de puissance de calcul sur l'équipement de l'utilisateur, dans la mesure où la sécurité viendra de la robustesse du protocole d'authentification et optionnellement de certification, nécessitant des ressources de traitement plus puissantes, mutualisées au niveau d'un serveur.

### Solution apportée par l'invention

Pour remédier à ces inconvénients, la présente invention concerne selon son acception la plus générale un procédé de transaction sécurisé sans support physique d'un identifiant de sécurité et sans jeton consistant à enregistrer sur un serveur biométrique B un profil biométrique Pᵢ lié de manière intrinsèque à un utilisateur unique Uᵢ, le ledit profil Pᵢ étant associé à au moins un identifiant de service, enregistré sur un serveur S distinct du serveur biométrique B, ledit identifiant de service étant accessible par l'utilisateur Uᵢ, et, lors d'une transaction, à acquérir le profil biométrique d'un utilisateur Pᵢ, à le transmettre au serveur biométrique B pour comparaison avec les profils biométriques enregistrées et rechercher et activer sur le serveur de service S un service associé au profil Pᵢ caractérisé en ce que l'étape d'enregistrement d'un nouvel utilisateur comporte au moment de la réception par un serveur central d'un profil Pᵢ, profil Pᵢ, l'exécution d'une étape de génération d'une clé maître, caractérisé en ce que ladite clé maître est une clé aléatoire X temporaire.

Le procédé selon l'invention comporte avantageusement :
- une étape de génération d'un identifiant de référence IDRₓ calculé par l'application d'une fonction cryptographique de référence FR non réversible à ladite clé X et d'enregistrement dans une table biométrique le couple unique (Pᵢ, IDRₓ) enregistré sur le serveur biométrique B,
- une étape de génération d'un identifiant personnel. IDPₓ calculé par l'application d'une fonction cryptographique FP non réversible, distincte de la fonction de référence FR, à ladite clé aléatoire X et d'enregistrement dans une table d'identité du couple (Iᵢ, IDPₓ) où Iᵢ désigne les informations personnelles associées audit profil Pᵢ, stockées sur un serveur P distinct du serveur biométrique B, - une étape de génération d'au moins un identifiant de service IDSEₓ calculé par l'application d'une fonction cryptographique FSE non réversible, distincte des fonctions de référence FR et FP, à ladite clé aléatoire X et d'enregistrement dans une table d'identité du couple (SEⱼ, IDSEₓ) où SEⱼ désigne les services associés audit profil Pᵢ, stockés sur au moins un serveur S distinct du serveur biométrique B,

La réalisation d'une transaction comporte de préférence :
- au moment de la réception par ledit serveur central d'un profil Pᵢ, l'exécution d'une étape de recherche du couple (Pᵢ, IDRₓ) sur le serveur biométrique B et d'application de la fonction inverse FR⁻¹ à la donnée IDRₓ pour déterminer la clé X,
- puis la recherche, si nécessaire, sur le serveur P des informations personnelles Iᵢ par application de la fonction FP à ladite clé X, afin de calculer l'identification IDPₓ et obtenir les informations personnelles Iᵢ,
- et enfin la recherche d'au moins un service SEⱼ sur au moins un serveur S par application de la fonction FSE à ladite clé X, afin de calculer l'identifiant IDSEₓ et obtenir le service SEⱼ.

Cette invention est particulière en ce sens qu'elle ne met en oeuvre aucun « identifiant » attribué arbitrairement à l'utilisateur, mais seulement des données biométriques intrinsèquement et irrévocablement liées à l'utilisateur. Par « identifiant attribué arbitrairement à l'utilisateur », on comprend un numéro, un nom, un couple nom-prénom, un pseudonyme, ou toute autre séquence numérique qui est attribuée sans relation physique intrinsèque avec l'utilisateur.

L'invention concerne aussi un terminal pour la réalisation d'une transaction sécurisée sans support physique d'un identifiant de sécurité et sans jeton selon le procédé susvisé caractérisé en ce que ledit terminal comprend un capteur biométrique, un écran d'affichage et un microprocesseur commandé pour transmettre un profil biométrique acquis par le capteur biométrique lors de l'initialisation d'une transaction, à afficher les informations provenant du serveur, relatives à au moins un service accessible, le terminal comportant en outre des moyens de saisie de données destinées au dialogue avec ledit service.

L'invention concerne aussi un programme d'ordinateur pour commander l'exécution sur un terminal informatique d'une transaction sécurisée sans support physique d'un identifiant de sécurité et sans jeton selon le procédé susvisé, caractérisé en ce qu'il est constitué par un code commandant l'acquisition d'un profil biométrique par le capteur biométrique dudit terminal et sa transmission à un serveur central, ainsi que l'affichage des informations provenant dudit serveur central, relatives à au moins un service accessible et le protocole d'échange de données entre le terminal et le serveur pour l'exploitation dudit service.

L'invention concerne encore un ensemble de serveurs pour la réalisation de transactions sécurisées sans support physique d'un identifiant de sécurité et sans jeton, caractérisé en ce que ledit ensemble de serveurs comprend des serveurs de répartition de la charge, un serveur d'entrée pour la réception des flux d'informations provenant des terminaux des utilisateurs, des serveurs d'exécution et de finalisation des transactions conformément au procédé susvisé, des serveurs assurant l'interface avec les équipements informatiques de tiers de confiance permettant d'accéder à un serveur biométrique B et à au moins un serveur de service S, et du serveur de clés formant le support desdites fonctions non réversibles.

De préférence, cet ensemble de serveurs pour la réalisation de transactions sécurisées comporte en outre des serveurs de traitement pour la réalisation des traitements de contrôle, de sécurité et de vraisemblance des informations provenant des équipements des utilisateurs.

L'invention concerne aussi un programme d'ordinateur pour commander l'exécution sur un serveur informatique de la réalisation d'une transaction sécurisé sans support physique d'un identifiant de sécurité et sans jeton caractérisé en ce qu'il est constitué par un code commandant l'acquisition d'un profil biométrique provenant d'équipements distants, le traitement desdits profil biométriques conformément au procédé susvisé et l'exécution du protocole d'échange de données entre le terminal et le serveur pour l'exploitation desdits.

### Description détaillée d'un exemple non limitatif de réalisation

La présente invention sera mieux comprise à la lecture de la description qui suit, se référant aux dessins annexés où :
- la figure 1 représente l'architecture matérielle d'un serveur pour la mise en oeuvre de l'invention,
- la figure 2 représente le schéma fonctionnel de l'invention.

Nous décrivons également les protocoles détaillés de création des identifiants et d'identification ainsi que les fonctionnalités du terminal biométrique.

### Architecture matérielle de l'invention

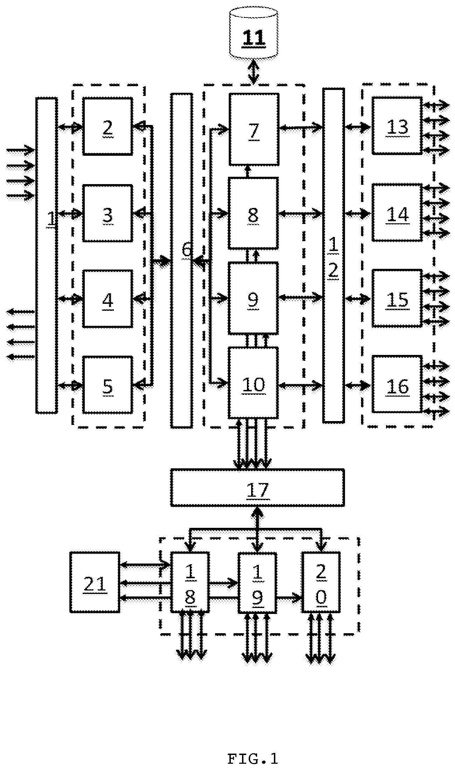

La figure 1 représente un schéma de principe de l'architecture matérielle d'un système pour la mise en oeuvre de l'invention.

Le système comprend des serveurs de répartition de la charge (1, 6, 12 et 17).

Le serveur d'entrée et de sortie (1) reçoit les flux d'informations provenant des équipements des utilisateurs, gère les files d'attente, pour la distribution à la volée sur des serveurs de traitement (2 à 5) et les retours vers les terminaux biométriques. Ces serveurs de traitement (2 à 5) réalisent par exemple des traitements de contrôle, de sécurité et de vraisemblance, et de transmission afin de vérifier que les informations transmises sont bien de nature biométrique. Il s'agit notamment de la vérification si l'identifiant du terminal (par exemple son adresse IP) figure sur un terminal enregistré sur une liste noire, ou si les informations présentent des anomalies représentatives de tentatives d'attaques, de saturation ou de fraudes.

Le serveur (6) répartit la charge des informations validées et prétraitées par les serveurs (2 à 5) pour les distribuer à une pluralité de serveurs (7 à 10).

Ces serveurs (7 à 10) exécutent la transaction conformément à l'invention décrite ci-après de manière plus détaillée. En particulier ces serveurs (7 à 10) ouvrent une session transactionnelle pour interagir avec le serveur (17) donnant accès aux serveurs (18 à 20) pour obtenir les profils biométriques, services et informations personnelles et rétroagissent avec les serveurs (2 à 5) pour échanger avec l'utilisateur concerné par une session transactionnelle ainsi qu'avec le répartiteur de charge (12) pour finaliser via les serveurs (13 à 16) la transaction en mode synchrone ou asynchrone.

Les serveurs (18 à 20) assurent quant à eux l'interface avec les équipements informatiques des tiers de confiance et gèrent l'accès consolidé aux les profils biométriques, informations personnelles et services, en interagissant avec un serveur de clés (21) formant le support des fonctions non réversibles mises en oeuvre par le procédé selon l'invention.

Le répartiteur de charge (17) assure l'accès sur les serveurs (18 à 20) pour accéder aux profils biométriques, services et informations personnelles.

Le répartiteur de charge (12) assure l'accès sur les serveurs (13 à 16) pour exécuter les transactions en mode synchrone ou asynchrone.

La base de données (11) conserve la trace de toutes les transactions, afin de permettre l'audit des transactions et en cas de crash physique, la restauration des transactions.

### Schéma fonctionnel de l'invention

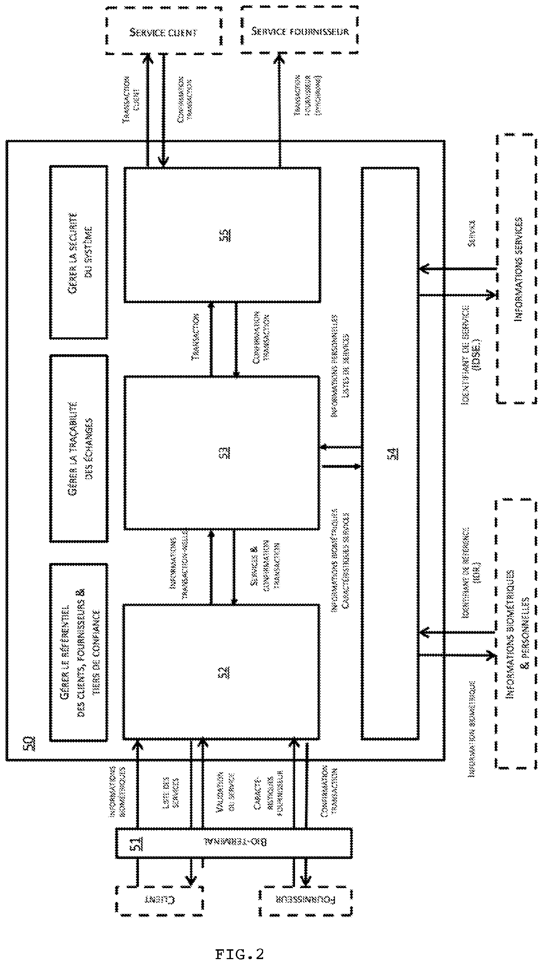

La figure 2 représente un exemple de schéma fonctionnel.

Le client accède au service par l'intermédiaire d'un équipement informatique (51) qui comprend un capteur biométrique, par exemple un capteur d'empreinte digitale, un capteur d'iris, un capteur de reconnaissance faciale ou encore d'un capteur vocal. Cet équipement (51) est connecté à un réseau pour ouvrir une session avec le système (50) qui héberge l'ensemble de serveurs constitutif de l'architecture matérielle de l'invention.

La première fonction (52) consiste à récupérer, contrôler et transmettre les informations nécessaires à la transaction, en particulier le profil biométrique acquis par le terminal (51) ainsi que des informations associés (par exemple la géolocalisation du terminal, les identifiants du terminal (adresse IP, différents identifiants tels que carte SIM,), l'horodatage, ainsi des informations que sur la nature de la transaction. Cette information provient soit de l'identifiant du couple fournisseur/terminal, par exemple lorsqu'il s'agit d'un terminal d'un fournisseur mis à disposition des utilisateurs, soit par l'identification de la page d'accès au service.

Dans le cas où le terminal (51) est mis à disposition du client par un fournisseur, par exemple dans un commerce physique où les deux parties de la transaction sont présentes en face à face, le fournisseur commence par une étape d'initialisation de son terminal. Cette étape d'initialisation est gérée par le même protocole d'identification que celui concernant l'identification du client. Elle consiste à saisir le profil biométrique du fournisseur, à procéder à un traitement décrit ci-après, et à enregistrer sur le terminal (51) un identifiant du service ou du fournisseur reconnu par ce traitement.

Ce traitement (52) est réalisé par les serveurs (2 à 5) via le répartiteur de charge (1).

La fonction suivante (53) consiste à piloter les chaines de traitement correspondant aux sessions transactionnelles ouvertes pour chaque utilisateur. A cet effet, chaque session transactionnelle consiste à transmettre, contrôler et réconcilier les données biométriques, les informations personnelles le cas échéant, les services fournis par la fonction (54), puis à propager les résultats au terminal (51) puis à obtenir le service sélectionné par le client ainsi que l'accord de la transaction et la validation du service géré par la fonction (52).

Ce traitement (53) est réalisé par les serveurs (7 à 10) via le répartiteur de charge (6), en interagissant avec les serveurs (18 à 20) et (2 à 5). Le traitement (54) est quant à lui spécifiquement réalisé par les serveurs (18 à 20) via le répartiteur de charge (17).

La transaction implique ensuite un traitement (55) d'orchestration, de contrôle et de passage d'ordre de manière synchrone ou asynchrone vers les services clients et fournisseurs, puis l'envoi d'une confirmation de transaction vers le client et le fournisseur, prise en charge par la fonction (52).

Ce traitement (55) est réalisé par les serveurs (13 à 16) via le répartiteur de charge (12).

Le système (50) intègre également des fonctions de gestion des clients, des fournisseurs et des tiers de confiance ainsi que de la traçabilité et les protocoles de sécurité.

### Protocoles de création des identifiants et d'identification

La description qui suit présente de manière plus détaillée le protocole de création des identifiants, puis dans la partie suivante, le protocole d'identification à partir d'un profil biométrique présenté au système.

Un des buts importants de l'invention est de garantir une sécurité des données intégrée nativement dans son architecture (« by design ») du fait que l'identifiant de référence du profil biométrique et les identifiants de références des services sont structurellement différents, leur génération étant gérée par un algorithme basé sur une fonction cryptographique à sens unique de manière à pouvoir effectuer des rapprochements à la volée selon les besoins transactionnels.

Le mécanisme proposé repose sur l'usage de protocoles cryptographiques tel que RSA avec des clés de taille supérieures à 128 bits.

L'opérateur du service doit choisir des fonctions cryptographiques F à sens unique pour gérer ses échanges avec chaque tiers de confiance. Elles seront appelées ci-après FR (pour la fonction de référence), FP (pour l'accès, le stockage et la mise à jour des informations personnelles) et FSE (pour l'accès, le stockage et la mise à jour des informations de service).

Ces fonctions permettront aux serveurs (18 à 21) de calculer en temps réel des valeurs Y = F(KQ,X) en fonction d'une valeur X et en utilisant une clef publique KQ afin que la connaissance de Y ne permette pas de remonter à X de façon algorithmiquement réaliste (les temps de reconstruction de la valeur source devant être rédhibitoires en pratique).

Pour remonter à X, il doit être nécessaire de disposer d'une clef privée KV tenue secrète qui permet de reconstruire X = F⁻¹(KV,Y) à partir de Y en utilisant une fonction F⁻¹ de décryptage.

La génération des identifiants de référence, des identifiants personnels et des identifiants de service d'un utilisateur Uᵢ se fera alors selon le protocole suivant :
Les serveurs (18 à 20) tirent au hasard une valeur aléatoire X par exemple à l'aide d'une fonction de hachage pour éviter statistiquement les collisions.

Les serveurs (18 à 20) interagissent avec le serveur (21) pour obtenir les clefs publiques KR, KP et KSE pour gérer respectivement les échanges avec les tiers de confiance gérant les informations biométriques, les informations personnelles et les services.

Les serveurs (18 à 20) fabriquent l'identifiant de référence IDR, l'identifiant personnel IDP et l'identifiant de service IDSE selon les règles simples suivantes (en cas de collision avec un identifiant existant, une nouvelle valeur X sera générée) :
IDR = FR(KR, X),
IDP = FP(KP, X)
IDSE = FSE(KSE, X).

De cette manière, les identifiants sont bien liées à travers X, ce qui permet de reconstituer un identifiant à partir de l'identifiant de référence à l'aide de la clef cryptographique privée qui permet le décryptage de l'identifiant de référence et donc de reconstituer la valeur aléatoire X à partir de leur connaissance. Les services clients appartenant à une personne physique donnée, reconnue à l'aide de son profil biométrique, pourront donc être ainsi reconstitués.

### Fonctionnalités du terminal biométrique

Le terminal (51) réalise des fonctionnalités relativement simples en fonctionnement nominal :
- Saisir / Transmettre des bio-données
- Saisir / Afficher / Stocker / Modifier /
- Transmettre les caractéristiques fournisseurs (sert aussi en phase d'initialisation où l'utilisateur est un fournisseur)
- Recevoir / Afficher / Transmettre des listes de services
- Recevoir / Afficher un quitus d'une transaction

Le terminal doit également réaliser des fonctions plus élaborées pour traiter le cas des transactions hors connexion :
- Entrer / Sortir du mode hors connexion
- Recevoir / Mettre à jour une clef de secours
- Vérifier la validité de la clef de secours.

## Revendications

1. Procédé de transaction sécurisé sans support-physique d'un identifiant de sécurité et sans jeton consistant à enregistrer sur un serveur biométrique B un profil biométrique P₁ lié de manière intrinsèque à un utilisateur unique U₁, le ledit profil P₁ étant associé à au moins un identifiant de service, enregistré sur un serveur S distinct du serveur biométrique B, ledit identifiant de service étant accessible par l'utilisateur Uᵢ, et, lors d'une transaction, à acquérir le profil biométrique d'un utilisateur P₁, à le transmettre au serveur biométrique B pour comparaison avec les profils biométriques enregistrés et rechercher et activer sur le serveur de service S un service associé au profil P₁ **caractérisé en ce que** l'étape d'enregistrement d'un nouvel utilisateur comporte, au moment de la réception par un serveur central d'un profil P₁, l'exécution d'une étape de génération d'une clé maître, et **en ce que** la réalisation d'une transaction comporte :
- au moment de la réception par ledit serveur central d'un profil Pi, l'exécution d'une étape de recherche du couple (P₁, IDRₓ) sur le serveur biométrique B et d'application de la fonction inverse FR⁻¹ à la donnée IDRₓ pour déterminer la clé X,
- puis la recherche, si nécessaire, sur le serveur P des informations personnelles Iᵢ par application de la fonction FP à ladite clé X, afin de calculer l'identification IDPₓ et obtenir les informations personnelles Ii,
- et enfin la recherche d'au moins un service SEᵢ sur au moins un serveur S par application de la fonction FSE à ladite clé X, afin de calculer l'identifiant IDSEₓ et obtenir le service SEⱼ.

2. Procédé de transaction sécurisé sans support physique d'un identifiant de sécurité et sans jeton selon la revendication 1 **caractérisé en ce qu'**elle comporte en outre une étape de génération d'un identifiant de référence IDRₓ calculé par l'application d'une fonction cryptographique de référence FR non réversible à ladite clé X et d'enregistrement dans une table biométrique le couple unique (P₁, IDRₓ) enregistré sur le serveur biométrique B.

3. Procédé de transaction sécurisé sans support physique d'un identifiant de sécurité et sans jeton selon la revendication 2 **caractérisé en ce qu'**elle comporte en outre une étape de génération d'un identifiant personnel IDRₓ calculé par l'application d'une fonction cryptographique FP non réversible, distincte de la fonction de référence FR, à ladite clé aléatoire X et d'enregistrement dans une table d'identité du couple (Iᵢ, IDPₓ) où Iid désigne les informations personnelles associées audit profil P₁, stockées sur un serveur P distinct du serveur biométrique B,
- une étape de génération d'au moins un identifiant de service IDSEₓ calculé par l'application d'une fonction cryptographique FSE non réversible, distincte des fonctions de référence FR et FP, à ladite clé aléatoire X et d'enregistrement dans une table d'identité du couple (SEⱼ, IDSEₓ) où SEⱼ désigne les services associés audit profil Pi, stockés sur au moins un serveur S distinct du serveur biométrique B.

4. Procédé de transaction sécurisé sans support-physique d'un identifiant de sécurité et sans jeton selon la revendication 1, 2 ou 3 **caractérisé en ce que** ladite clé maître est une clé aléatoire X temporaire.

5. Ensemble de serveurs pour la réalisation de transactions sécurisées sans support physique d'un identifiant de sécurité et sans jeton, **caractérisé en ce que** ledit ensemble de serveurs comprend des serveurs de répartition de la charge, un serveur d'entrée pour la réception des flux d'informations provenant des terminaux des utilisateurs, des serveurs d'exécution et de finalisation des transactions conformément au procédé susvisé, des serveurs assurant l'interface avec les équipements informatiques de tiers de confiance permettant d'accéder à un serveur biométrique B et à au moins un serveur de service S, et du serveur de clés formant le support desdites fonctions non réversibles.

6. Ensemble de serveurs pour la réalisation de transactions sécurisées selon la revendication précédente **caractérisé en ce qu'**il comporte en outre des serveurs de traitement pour la réalisation des traitements de contrôle, de sécurité et de vraisemblance des informations provenant des équipements des utilisateurs.

7. Programme d'ordinateur pour commander l'exécution sur un serveur informatique de la réalisation d'une transaction sécurisée sans support physique d'un identifiant de sécurité et sans jeton **caractérisé en ce qu'**il est constitué par un code commandant l'acquisition d'un profil biométrique provenant d'équipements distants, le traitement desdits profil biométriques conformément au procédé susvisé et l'exécution du protocole d'échange de données entre le terminal et le serveur pour l'exploitation desdits.

## Patentansprüche

1. Gesichertes Verfahren einer Transaktion ohne materiellen Träger einer Sicherheitskennung und ohne Token, das darin besteht, auf einem biometrischen Server B ein biometrisches Profil P₁ zu registrieren, das intrinsisch mit einem einzigen Benutzer U₁ verbunden ist, wobei besagtes Profil P₁ mit mindestens einer Dienstkennung verknüpft ist, die auf einem Server S gespeichert ist, der nicht der biometrische Server B ist, wobei besagte Dienstkennung für den Benutzer U₁ zugänglich ist, und bei einer Transaktion das biometrische Profil P₁ eines Benutzers zu erfassen und zwecks Vergleichs mit den gespeicherten biometrischen Profilen an den biometrischen Server B zu übermitteln und auf dem Dienstserver S einen mit dem Profil P₁ verknüpften Dienst zu suchen und zu aktivieren, **dadurch gekennzeichnet, dass** der Schritt der Speicherung eines neuen Benutzers zum Zeitpunkt des Eingangs eines Profils P₁ auf dem Zentralserver die Ausführung eines Schrittes der Generierung eines Masterschlüssels umfasst, und dadurch, dass die Durchführung einer Transaktion folgendes umfasst:
- zum Zeitpunkt des Eingangs eines Profils Pᵢ auf besagtem Zentralserver die Ausführung eines Schritts der Suche des Paares (P₁, IDRₓ) auf dem biometrischen Server B und die Anwendung der Umkehrfunktion FR⁻¹ auf IDRₓ, um den Schlüssel X zu bestimmen,
- dann bei Bedarf die Suche der persönlichen Informationen Iᵢ auf dem Server P durch Anwendung der Funktion FP auf besagten Schlüssel X, um die Identifikation IDPₓ zu berechnen und die persönlichen Informationen Ii zu erhalten,
- und schließlich die Suche von mindestens einem Dienst SEⱼ auf mindestens einem Server S durch Anwendung der Funktion FSE auf besagten Schlüssel X, um die Kennung IDSEₓ zu berechnen, und den Dienst SEⱼ zu erhalten.

2. Gesichertes Verfahren einer Transaktion ohne materiellen Träger einer Sicherheitskennung und ohne Token nach Anspruch 1, **dadurch gekennzeichnet, dass** sie darüber hinaus einen Schritt der Generierung einer Bezugskennung IDRₓ umfasst, die durch Anwendung einer kryptographischen, nicht reversiblen Bezugsfunktion FR auf besagten Schlüssel X berechnet wird, und der Speicherung des auf den biometrischen Server B gespeicherten spezifischen Paars (P₁, IDRₓ) in einer biometrischen Tabelle.

3. Gesichertes Verfahren einer Transaktion ohne materiellen Träger einer Sicherheitskennung und ohne Token nach Anspruch 2, **dadurch gekennzeichnet, dass** sie darüber hinaus einen Schritt der Generierung einer persönlichen Kennung IDRₓ umfasst, die berechnet wird durch die Anwendung einer nicht reversiblen kryptographischen, von der Bezugsfunktion FR abweichenden Funktion FP, auf den besagten Zufallsschlüssel X, und der Speicherung des Paars (Iᵢ, IDPₓ), wo Iid die persönlichen Informationen bezeichnet, die mit besagten Profil Pi verknüpft und auf einem vom biometrischen Server B abweichenden Server P gespeichert sind, in einer Identitätstabelle.
- einen Schritt der Generierung von mindestens einer Dienstkennung IDSEₓ, die berechnet wird durch die Anwendung einer nicht reversiblen, von den Bezugsfunktionen FR und FP abweichenden kryptografischen Funktion FSE auf besagten Zufallsschlüssel X, und der Speicherung des Paars (SEⱼ, IDSEₓ), wo SEⱼ die mit besagtem Profil verknüpften Dienste Pi bezeichnet, die auf mindestens einem, vom biometrischen Server B abweichenden Server S gespeichert sind, in einer Identitätstabelle.

4. Gesichertes Verfahren einer Transaktion ohne materiellen Träger einer Sicherheitskennung und ohne Token nach Anspruch 1, 2 oder 3, **dadurch gekennzeichnet, dass** besagter Masterschlüssel ein temporärer Zufallsschlüssel X ist.

5. Eine Gruppe von Servern zur Durchführung von gesicherten Transaktionen ohne materiellen Träger einer Sicherheitskennung und ohne Token, **dadurch gekennzeichnet, dass** besagte Gruppe Lastverteilungsserver umfasst, einen Eingangsserver zur Annahme der Datenströme der Benutzerterminals, Server zur Ausführung und zum Abschließen der Transaktionen gemäß dem oben genannten Verfahren, und Server, die als Schnittstelle zwischen den EDV-Geräten vertrauenswürdiger dritter Parteien, welche den Zugriff auf einen biometrischen Server B und mindestens einen Server S ermöglichen, und dem Schlüsselserver, welcher den Träger der besagten nicht reversiblen Funktionen bildet, dienen.

6. Gruppe von Servern zur Durchführung von gesicherten Transaktionen nach dem vorhergehenden Anspruch, **dadurch gekennzeichnet, dass** sie darüber hinaus Verarbeitungsserver zur Kontroll-, Sicherheits- und Wahrscheinlichkeitsermittlungsverarbeitung der von den Benutzergeräten stammenden Daten umfasst.

7. Computerprogramm zum Befehlen der Ausführung einer gesicherten Transaktion ohne materiellen Träger einer Sicherheitskennung und ohne Token auf einem EDV-Server, **dadurch gekennzeichnet, dass** es aus einem Code besteht, der die Erfassung eines biometrischen, von den Remotegeräten stammenden Profils, die Verarbeitung besagter biometrischer Profile gemäß obigem Verfahren und die Ausführung des Datenaustauschprotokolls zwischen dem Terminal und dem Server zur Auswertung der [Daten] steuert.

## Claims

1. A method for a secure transaction without physical support of a security identifier and without token consisting in recording on a biometric server B a biometric profile P₁ linked intrinsically to a unique user U₁, said profile P₁ being associated with at least one service identifier, recorded on a server S distinct from the biometric server B, said service identifier being accessible by the user U₁, and, during a transaction, acquiring the biometric profile of a user P₁, in transmitting it to the biometric server B for comparison with the biometric profiles recorded and in searching for and activating, on the service server S, a service associated with the profile P₁, **characterized in that** the step of recording a new user comprises, at the time of receipt by a central server of a profile P₁, the execution of a step of generating a master key, and **in that** the execution of a transaction includes:
- when said central server receives a profile Pi, the execution of a step of searching for the pair (Pi, IDRₓ) on the biometric server B and the application of the reverse function FR⁻¹ to the piece of data IDRₓ, in order to determine the key X,
- then searching on the server P, if so required, for personal information Ii by applying the function FP to said key X, in order to compute the identification IDPₓ and to obtain the personal information Ii,
- and eventually searching for at least one service SEⱼ on at least one server S by applying the function FSE to said key X, in order to compute the identifier IDSEₓ and obtain the service SEⱼ.

2. A method for a secure transaction without physical support of a security identifier and without token according to claim 1, **characterized in that** it further comprises a step of generating a reference identifier IDRₓ computed by applying a non-reversible reference cryptographic function FR to said key X and of recording, in a biometric table, the unique pair (P₁, IDRₓ) recorded on the biometric server B.

3. A method for a secure transaction without physical support of a security identifier and without token according to claim 2, **characterized in that** it further comprises a step of generating a personal identifier IDRₓ computed by applying a non-reversible cryptographic function FP, different from the reference function FR, to said random key X and of recording, in a table of identity of the pair (Iᵢ, IDPₓ) where Iᵢd refers to the personal information associated with said profile P₁ stored on a server P distinct from the biometric server B,
- a step of generating at least one service identifier IDSEₓ calculated by applying a non-reversible cryptographic function FSE distinct from the reference functions FR and FP, to said random key X and of recording in a table of identity of the pair (SEⱼ, IDSEₓ) where SEⱼ refers to the services associated with said profile Pᵢ, stored on at least one server S distinct from the biometric server B.

4. A method for a secure transaction without physical support of a security identifier and without token according to claim 1, 2 or 3, **characterized in that** said master key is a temporary random key X.

5. A set of servers for the execution of secure transactions without physical support of a security identifier and without token, **characterized in that** said set of servers comprises load distribution servers, an input server for the receipt of information streams from the users terminals, servers for the execution and finalizing the transactions according to the above-mentioned method, servers providing one interface with Trusted Third Parties' computer equipment making it possible to access a biometric server B and at least one service server S, and the key server forming the support of said non-reversible functions.

6. A set of servers for the execution of secure transactions according to the preceding claim, **characterized in that** it further comprises processing servers for the execution of processing operations relating to control, security and likelihood of information from the users equipment.

7. A computer program for controlling the execution, on a computer server, of a secure transaction without physical support of a security identifier and without token, **characterized in that** it consists of a code controlling the acquisition of a biometric profile from remote equipment, the processing of said biometric profiles in accordance with the above-mentioned method and the execution of the protocol of data exchange between the terminal and the server for exploiting said [profiles].
